**Europäisches Patentamt**

**(19)** **European Patent Office**

**Office européen des brevets**

**(11)** **EP 0 701 395 B1**

## (12) EUROPEAN PATENT SPECIFICATION

(45) Date of publication and mention
of the grant of the patent:
**08.09.1999 Bulletin 1999/36**

(21) Application number: **94917190.4**

(22) Date of filing: **11.05.1994**

(51) Int. Cl.$^6$: **A01B 69/00**

(86) International application number:
**PCT/NL94/00108**

(87) International publication number:
**WO 94/26088 (24.11.1994 Gazette 1994/26)**

(54) **METHOD FOR STEERING AN AGRICULTURAL MACHINE AND AN AGRICULTURAL MACHINE**

LANDWIRTSCHAFTLICHE MASCHINE UND VERFAHREN ZUM STEUERN DERSELBEN

PROCEDE PERMETTANT DE DIRIGER UNE MACHINE AGRICOLE ET MACHINE AGRICOLE
ASSOCIEE

(84) Designated Contracting States:
**AT BE CH DE DK ES FR GB LI NL PT SE**

(30) Priority: **13.05.1993 NL 9300829**

(43) Date of publication of application:
**20.03.1996 Bulletin 1996/12**

(73) Proprietor: **Netagco Holding B.V.**
**8211 AJ Lelystad (NL)**

(72) Inventor:
**Mutsaers, Franciscus Hubertus Johannes**
**NL-9625 PC Overschild (NL)**

(74) Representative:
**Marsman, Hermanus Antonius M. et al**
**Vereenigde Octrooibureaux**
**Nieuwe Parklaan 97**
**2587 BN Den Haag (NL)**

(56) References cited:
FR-A- 962 924          GB-A- 1 483 581
US-A- 3 765 501          US-A- 4 367 802
US-A- 4 883 128

• DATABASE WPI Section PQ, Week 8845, 21
December 1988 Derwent Publications Ltd.,
London, GB; Class P11, AN 88-321263/45
ASTAFEV ET AL. 'TRACTOR AND IMPLEMENT
GUIDANCE SYSTEM' & SU,A,1 393 322
(TSELINSEKHOZMEKHANI) 7 May 1988

## Description

The present invention relates to a method according the preamble of claim 1. A method of this type is disclosed in FR-A-962924. According to this prior art a registration means which can rotate round a vertical axis is used. In case of a deviation from the middle position, the driver of the machine can adjust the course of the machine so that the registration means reaches again said middle position

Specifically when treating rows of crops a clear differentiation must be made between said rows of crops themselves and that which is located between them. In the case of hoeing operations only that which is between the rows of crops has to be removed and in the case of spraying it is necessary either to spray only the crops themselves or to spray that which is between them. Moreover, the wheels of the agricultural machine must move between the rows of crops. Consequently, the steering of such an agricultural machine is extremely important. Such steering must take place according to a series of desired positions. According to French Patent 962,924 it is proposed to affix a marker to the frame of the agricultural machine, the driver having to steer the agricultural machine in such a way that the marker moves in accordance with the series of desired positions.

A rough approximation of the desired direction is possible by this means. In practice it has been found that the driver zigzags around the series of desired positions. In order to prevent undesired areas also being subjected to treatment as a consequence of the extent of this zigzag, the speed of travel has to be relatively low and/or the number of steering corrections has to he relatively large and/or the maximum permitted margin in accuracy of steering has to he relatively large. This margin has to be taken into account when adjusting the cultivation equipment with respect to the crop.

Equipment for steering an agricultural machine is disclosed in US Patents 3,765,501 and 4,883,128.

In US Patent 3,765,501 a rotary disc which protrudes frontwards in the direction of travel of the machine is mounted on an auxiliary arm. This rotary disc is set up for following the spread of one furrow. That is to say, no information is obtained with regard to the actual direction of travel.

In US Patent 4,883,128 position sensors are present for positioning an arm between two rows of crops. Depending on the deviation from an optimum value, a signal is given to the driver of the agricultural machine.

The aim of the present invention is to provide a method with which more effective steering corrections can be carried out in a simple manner and the series of desired positions is followed more accurately, so that it would be possible to increase the efficiency of the cultivation treatment by means of a driving speed which can he kept relatively high and a relatively low margin for steering accuracy.

This aim is achieved with a method described above which has the characterising features according to Claim 1. The fact on which said method in based is that steering of a machine which is travelling forwards, or a point travelling forwards on a machine, results directly in a change in the direction of travel and that the position assumed from one instant to another is merely an indirect consequence hereof. Accordingly, with respect to steering, the deviation between the actual and the desired direction of travel is the parameter giving the most complete information with regard to the need for and the effect of steering corrections. The method proposed according to the invention is based on registration of said deviation, by which means steering corrections can he metered an needed and the efficiency of the cultivation treatment can be increased. The actual direction of travel is determined by simultaneously determining the actual position of a reference point on the machine and determining a previous position of the reference point or a position derived therefrom.

Processing of the actual direction of travel as a starting point for the action to be undertaken by the driver can be carried out in various ways. Thus, it in possible to affix a marker which has a fixed relationship with the actual direction of travel. With this arrangement the driver makes adjustments so that the marker is also located in the series of desired positions. This is effected by steering.

According to another possibility, a marker is mounted and the latter is positioned in accordance with the series of desired positions. The difference in direction between said marker and the actual direction of travel is then determined and a steering correction is made on the basis of said difference.

The invention also relates to an agricultural machine comprising a frame and a reference point arranged thereon. According to the present invention, said machine is characterised in that a register arm is mounted so that it hinges at said reference point, the free end of which register arm is provided with means for engaging the soil from the rear, for following the route of the agricultural machine, means being present for adjusting the steering of the agricultural machine depending on the rotation of the register arm. The terms front (forwards) and back (backwards, to the rear) used in this description are relative to the direction of travel of the equipment. A register arm is a particularly effective and simple means for determining the actual direction of travel of the agricultural machine. The means which follow the route of the agricultural machine can comprise all means disclosed in the prior art, such as pins, discs, rollers, towing rings, etc. (and may optionally be duplicated). Said means must not be affected by any obstacle and must be steered exclusively by engaging in the soil.

According to a particular embodiment of the invention, the register arm described above is provided with an extension which is rigidly connected thereto and is coupled with a marker. The whole is mounted so that it is rotatable about the reference point. With this arrangement the driver has to adjust the steering in such a way that the marker follows the series of desired positions. Of course, it is also possible to automate a staring operation of this type. According to another embodiment of the present invention, a marker which is positioned manually or automatically in accordance with the series of desired positions is mounted in the extension of the machine. The desired direction of travel is obtained in this way. By then determining the discrepancy with the actual direction of travel, the steering can be adjusted, manually or automatically, on the basis of said discrepancy. One means for determining said discrepancy comprises a rotatable disc or disc section. The reference point can be affixed anywhere on the agricultural machine, but is preferably placed in line with a series of desired positions which is to be followed. Seen from the main direction of travel, the reference point is preferably placed in line with a point which is most critical with respect to the cultivation, such as the narrowest passage between hoes or the midpoint of a spray cone. This can be above the crop or precisely in the rows between the crop. The agricultural machine can comprise a vehicle, which is optionally articulated, and in the case of an articulated vehicle the reference point is preferably located on the rearmost section because this is where, in general, the cultivation equipment will also be mounted. Furthermore, it is possible for the rear-most section to be provided with separate (final) steering (adjustment). Finally, it is possible that means for moving the reference point are present in order to facilitate the technical implementation of the invention described above.

The invention will be described in more detail below with reference to that which is disclosed in the prior art and a few illustrative embodiments of the invention. In the drawing shows:

Fig. 1 diagrammatically, a top view of equipment according to the prior art;
Fig. 2 in perspective, an embodiment of an agricultural machine according to the prior art in combination with the first embodiment of the agricultural machine according to the invention;
Fig. 3 diagrammatically, the principle of the steering according to the invention;
Figs 4a-4e the practical implementation of the principle according to Fig. 3 in the invention;

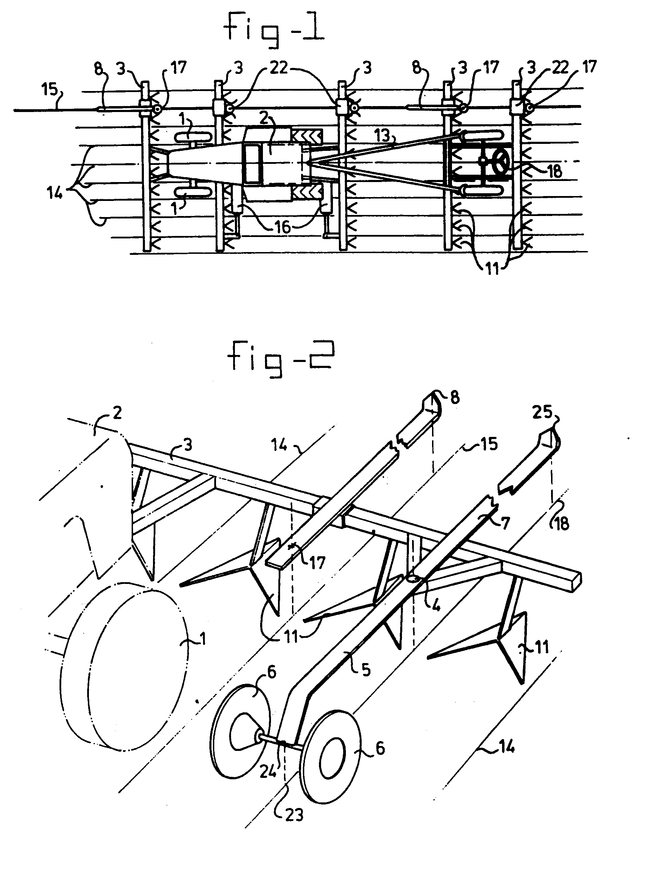

Fig. 1 shows an agricultural machine comprising a tractor 2 provided with a trailer 13. Both trailer 13 and tractor 2 are provided with frame beams 3, the number and position of which depend on the application. Cultivation equipment, such as hoes 11, is mounted on beams 3. This equipment must be moved between crop rows 14 and 15. The movement of the individual beams 3 with respect to crop rows 14 can be determined with reference to the movement of the reference points 17 with respect to crop row 15. With regard to steering, in this example crop row 15 is the series of desired positions for the reference points 17. Steering can be effected by means of manual or automated fine steering of tractor 2 or additionally by means of manual or automated final steering adjustment made using hydraulic jacks 16 or some other type of steering device 18 as correction of the direction of travel followed by trailer 2. With this arrangement it is possible to work with different drivers.

According to the prior art, information with regard to the position of a reference point 17 with respect to crop row 15 can be obtained in various ways. For example visually, for instance with the use of a marker 8 which is rigidly mounted on frame beam 3 in line with the reference point, or with the use of a sensor 22, the signal from which can be processed to produce a steering correction. A laser receiver to be mounted on frame beam 3 and a laser beam to be directed parallel to crop rows 14 are further possibilities. With regard to steering, the position determination which is characteristic for the prior art provides limited information on the need for, and the effect of, the steering corrections to be made. This limitation is reflected in a relatively low degree of steering accuracy, which is further reduced as the degree of difficulty increases, inter alia as a consequence of the driving speed. When the equipment shown in Fig. 1 is set up it is necessary to work with a relatively large margin with regard to steering accuracy, which is reflected in the use of relatively narrow hoes. In conjunction with the relatively low driving speed which must be maintained, the overall efficiency of the cultivation treatment will be limited.

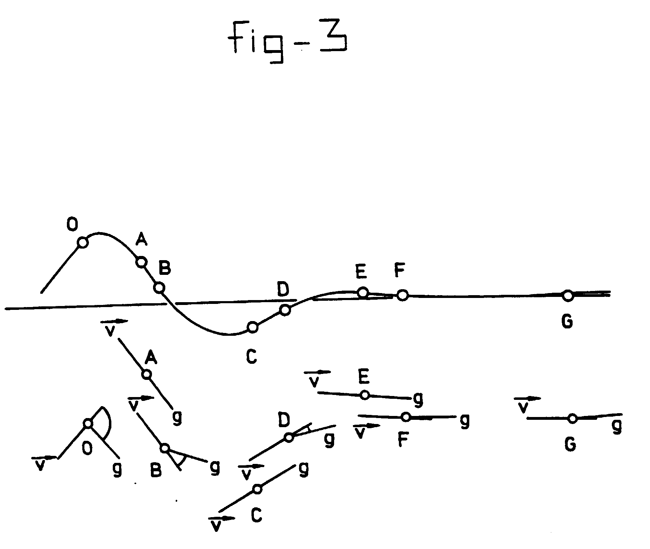

According to the invention a different type of steering is proposed which makes it possible to increase the effectiveness of the cultivation treatment. For the sake of simplicity only part of tractor 2 with frame beam 3 in the front lift is shown in Figs 2-6. However, the arrangement shown applies equally to the steering of the other frame beams 3 shown in Fig. 1.

Fig. 1, Fig. 2 and Fig. 5 show the use of hoes, but it must be understood that the arrangement shown also relates to various cultivation operations where an agricultural machine, or a point on an agricultural machine, has to be steered with respect to a series of desired positions, which may be real or imaginary.

Fig. 2 shows part of a tractor 2 with one of the steering wheels 1 beneath it. Tractor 2 is provided with a frame beam 3, which is rigidly connected thereto and to which hoeing means 11 are fitted. A reference point 17 is located precisely between two of said hoeing means, a fixed marker 8 according to the prior art being attached in line with said reference point. A reference point 4 is also arranged precisely between two of said hoeing means and in line with the narrowest passage between them. According to the invention a register arm 5 is rotatably journalled at said reference point 4. The free end of register arm 5 is provided with discs 6 which travel along with the arm. The centre of the composite frictional force exerted by the soil on discs 6 must act at 23 in line with the centre of the fixing 24 on register arm 5. Register arm 5 is polled along from reference point 4 and during movement will, under the influence of the frictional force acting at 23, assume a position which in the case of a straight line movement corresponds to the actual direction of travel of reference point 4 and in the case of movement along a curve corresponds to a derivative thereof. An extension 7 is rigidly connected to said rotatable register arm 5 and a marker 25 is arranged at the end of said extension.

During a treatment, the driver of tractor 2 has throughout to control the steering equipment in such a way that marker 8 is in line with the series of desired positions 15 or the steered marker 25 is in line with row 18. It is also possible for the required steering corrections to be made automatically.

Fig. 3 shows, diagrammatically, the steering according to the present invention. The actual direction of travel in the various points is shown by $\vec{v}$, whilst g indicates the desired direction of travel. In the upper part of Fig. 3 the horizontal line indicates the series of desired positions, whilst the curve O-A-B-C-D-E-F-G shows the position of the tractor.

In the lower part of Fig. 3 both the actual direction of travel $\vec{v}$ and the desired direction of travel g at the various points O-G are indicated.

At point O the deviation between said actual direction of travel and the desired direction of travel is extreme. This situation can arise in particular when turning round or turning in at the top end of a field. For this reason a large steering correction is initiated at O. The steering correction becomes smaller as the deviation in the direction of travel decreases. The correction stops at point A where $\vec{v}$ and g are coincident. At point B a moderate deviation in the direction of travel $\vec{v}$ is signalled even before the reference point crosses the series of desired positions. The application of the opposite lock made in response to said signal curbs the speed of overrun. The application of opposite lock in good time at points B, D and F damps the amplitude with which the reference point moves about the series of desired positions, indicated by the horizontal line. When the reference point approaches the series at F only very small steering corrections at long intervals are still required in order to continue to follow said series. The margin in steering accuracy is thus minimised.

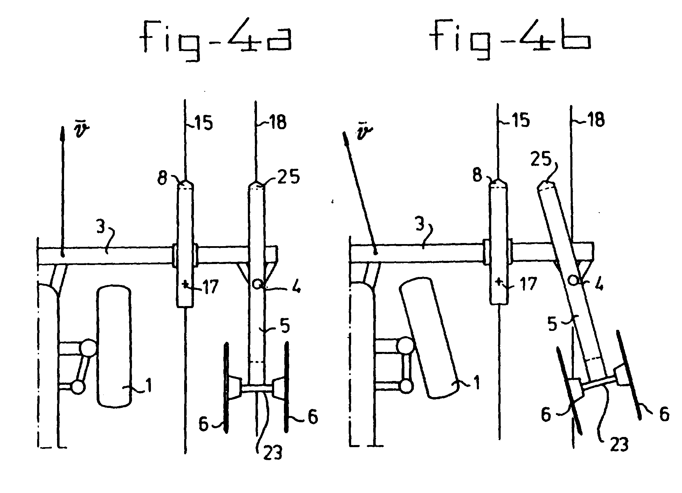

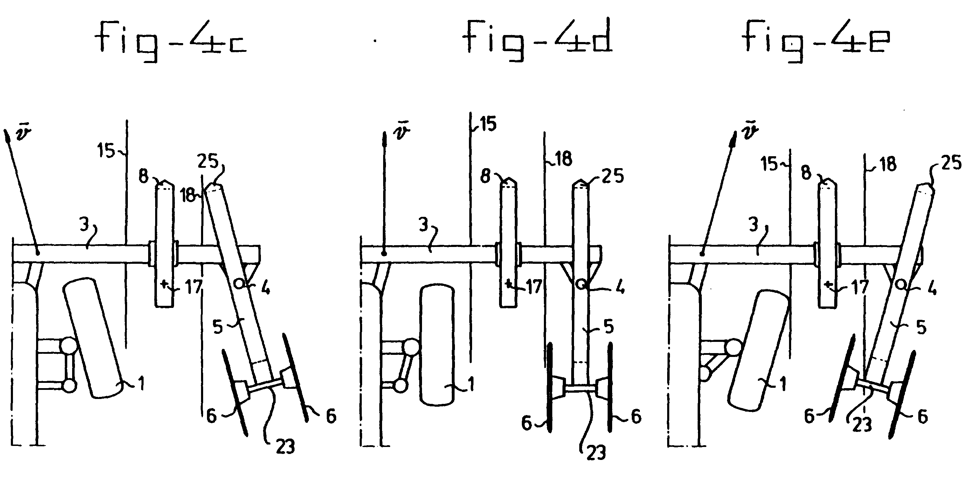

In Fig. 4 the various adjustments achieved with the aid of the tractor shown in Fig. 2 are clearly illustrated in five separate snapshots of the combined use of markers 8 and 25.

The actual direction of travel of the moving machine a a whole with respect to the series of desired positions is indicated by displacement vector $\vec{v}$. This

actual direction of travel is determined by several factors such as the operation of the steering means, deviations from the series of desired positions with respect to the straight line and the effect of the soil on the machine.

Figs 4a and 4b show two separate snapshots in which the positions of the reference points 17 and 4 correspond with the respective series of desired positions 15 and 18. Case a differs from b in respect of the direction of travel ($\vec{v}$) applying at that point in time.

On the basis of the information obtained using the marker 8 according to the prior art no correction will be made in the cases shown in Figs 4a and b. However, it can be seen from the drawing that in the case of Fig. 4b a correction is needed (see direction $\vec{v}$). This necessity is rightly indicated with marker 25 according to the invention. It is clear that steering correction to the right is needed in order to move said marker back to the ideal line 18. By this means the direction of travel of reference point 4 is made to correspond with the desired direction of travel.

Figs 4c-4e show three snapshots in which the positions of the reference points 17 and 4 show an equal deviation to the right with respect to the respective series of desired positions 15 and 18.

With marker 8 no difference between these instances is detected by the driver or by an automated system linked to marker 8 and a steering correction of relatively equal magnitude will be made to the left.

In case 4c the result of this is that the direction of travel is shifted even further to the left and that at the point in time when line 15 is reached a very large opposite lock correction to the right would be needed in order to be able to continue to follow said line 15. That is to say, an oscillating motion of high amplitude is produced according to the prior art. Marker 25 is virtually coincident with line 18 in case 4c, which signifies that the direction of travel of reference point 4 shows reasonable correspondence with the desired direction of travel, so that no steering correction will be made. Furthermore, marker 25 will cross the line 18 to the left even before reference point 4 reaches this line 18, so that a steering correction to the right will be made in good time.

It can be deduced from Figs 4d and 4e that in case 4e the steering correction needed to shift the direction of travel of reference point 4 to the left will be relatively larger than that needed in case 4d. This is shown by the greater deviation of marker 25 with respect to line 18. The extent of the steering correction can be metered on the basis of the detected magnitude of the deviation. In this way a situation is prevented where, in case 4d, after a steering correction to the left which is relatively too large, this has to he followed by a substantial opposite lock correction to the right and, in case 4e, the deviation to the right increases unnecessarily and is maintained over a relatively large distance as a result of a correction which is relatively too small.

It can be deduced from Fig. 4 that, compared with equipment according to the prior art, which is based on the determination of position, equipment according to the present Application provides more complete information on the need for, and the effect of, steering corrections. On the basis of the actual direction of travel of a reference point, said point can be steered more accurately with respect to a series of desired positions.

Example

Equipment according to Fig. 2 which is either provided with a marker 8 according to the prior art or constructed with marker 25 according to the invention is used, equipped with hoes, in a young onion crop. When marker 8 was used the spacing between the hoes was 5 cm and the maximum driving speed which could be achieved was 5 km/hour. Using marker 25 according to the present invention it was possible to reduce the spacing between the hoes to 2 cm and a driving speed of 7 km/hour could be maintained without detectable damage to the crop. Assuming a crop width of 0.5 cm, the margin in steering accuracy could be reduced by 66 % and the driving speed could be increased by 40 % when the equipment according to the present invention was used.

Although the invention has been described above with reference to preferred embodiments, it must be understood that numerous modifications can be made thereto without going beyond the scope of the present Application as determined by the claims. For example, it is possible to automate the steering such that it is dependent on the deviation from the series of desired positions and the position of the register arm.

Claims

1. Method for steering an agricultural machine, comprising the determination of the series of desired positions of the machine, the determination of the actual status of the machine by means of a registration means (5) which can rotate round a substantial vertical axis of rotation, and steering of the machine into the desired positions on the basis of said determinations, with a simultaneous determination of the actual position of a reference point (4) located on the machine near said axis of rotation and determination of a previous position of the reference point (4) or a position derived therefrom, whereby the said last determination comprises dragging the registration means (5) over the soil at a distance from said axis at the rear with respect to the direction of travel of the agricultural machine., characterized in that the registration means (5) contact the soil through means (6) which move with respect to the soil towards said axis of rotation.

2. Agricultural machine comprising a frame (3) and registration means (5) which can rotate round a substantial vertical axis of rotation located at a reference point (4) on said frame (3), and means for adjusting the steering of the agricultural machine depending on the rotation of the registration means (5), the registration means comprises means (6) for engaging the soil at the rear with respect to the reference point (4) and the direction of travel of the machine, and a register arm (5) extending between said axis of rotation and the said means (6) for engaging the soils characterized in that said means (6) for engaging the soil comprise at least one rotatable disc which is suitable for moving over the soil towards said axis of rotation.

3. Agricultural machine according to claim 2, characterized in that said register arm (5) is provided with an extension (7) beyond said axis of rotation, which extension (7) support a visible marker (25).

Patentansprüche

1. Verfahren zum Lenken einer landwirtschaftlichen Maschine, mit der Bestimmung von der Reihe von gewünschten Positionen der Maschine, der Bestimmung von dem tatsächlichen Status der Maschine mit Hilfe einer Ausrichtungseinrichtung (5), die um eine im wesentlichen vertikale Drehachse drehbar ist, und dem Lenken der Maschine in die gewünschten Positionen auf der Basis dieser Bestimmungen, mit einer gleichzeitigen Bestimmung der tatsächlichen Position eines Referenzpunktes (4), der sich an der Maschine nahe der Drehachse befindet, und Bestimmung einer vorhergehenden Position des Referenzpunktes (4) oder einer davon abgeleiteten Position, wobei diese letzte Bestimmung das Hinterherziehen der Ausrichtungseinrichtung (5) über den Erdboden mit einem Abstand von der Achse an der Hinterseite bezüglich der Verfahrrichtung der landwirtschaftlichen Maschine umfaßt, dadurch gekennzeichnet, daß die Ausrichtungseinrichtung (5) mit dem Erdboden mit Hilfe von Einrichtungen (6) Kontakt hat, die sich bezüglich des Erdbodens zur Drehachse hin bewegen.

2. Landwirtschaftliche Maschine, mit einem Rahmen (3) und einer Ausrichtungseinrichtung (5), die um eine im wesentlichen vertikale Drehachse drehbar ist, die sich an einem Referenzpunkt (4) an dem Rahmen (3) befindet, und mit Einrichtungen zum Einstellen der Lenkung der landwirtschaftlichen Maschine in Abhängigkeit von der Verdrehung der Ausrichtungseinrichtung (5), wobei die Ausrichtungseinrichtung Einrichtungen (6), um an der Hinterseite bezüglich des Referenzpunktes (4) und der Verfahrrichtung der Maschine mit dem Erdbogen in Eingriff zu kommen, und einen Ausrichtungsarm (5) aufweist, der sich zwischen der Drehachse und den Einrichtungen (6) erstreckt, um mit dem Erdboden in Eingriff zu kommen, dadurch gekennzeichnet, daß die Einrichtungen (6), um mit dem Erdboden in Kontakt zu kommen, zumindest eine drehbare Scheibe enthalten, die dazu ausgestaltet ist, um in der Richtung zur Drehachse über den Erdboden bewegt zu werden.

3. Landwirtschaftliche Maschine nach Anspruch 2, dadurch gekennzeichnet, daß der Ausrichtungsarm (5) mit einer Verlängerung (7) versehen ist, die sich bis über die Drehachse hinaus erstreckt, wobei die Verlängerung (7) eine sichtbare Markierung (25) trägt.

**Revendications**

1. Procédé de direction d'une machine agricole, comprenant la détermination de la série des positions voulues de la machine, la détermination de l'état actuel de la machine à l'aide d'un dispositif de positionnement (5) qui peut tourner autour d'un axe pratiquement vertical de rotation, et la direction de la machine aux positions voulues d'après les déterminations, avec détermination simultanée de la position réelle d'un point de référence (4) placé sur la machine près dudit axe de rotation et avec détermination d'une position antérieure du point de référence (4) ou d'une position dérivée de cette position précédente, de manière que la dernière détermination comprenne la traînée du dispositif (5) de positionnement sur le sol à une certaine distance de l'axe en arrière dans la direction de déplacement de la machine agricole, caractérisé en ce que le dispositif de positionnement (5) est au contact du sol par l'intermédiaire d'un dispositif (6) qui se déplace par rapport au sol vers l'axe de rotation.

2. Machine agricole comprenant un châssis (3) et un dispositif de positionnement (5) qui peut tourner autour d'un axe pratiquement vertical de rotation placé en un point de référence (4) sur le châssis (3), et un dispositif d'ajustement de la direction de la machine agricole en fonction de la rotation du dispositif de positionnement (5), le dispositif de positionnement comprenant un dispositif (6) de contact avec le sol en arrière du point de référence (4) et dans la direction de déplacement de la machine, et un bras de positionnement (5) s'étendant entre l'axe de rotation et ledit dispositif (6) de contact avec le sol, caractérisée en ce que ledit dispositif (6) de contact avec le sol comporte au moins un disque rotatif qui peut se déplacer sur le sol dans la direction de l'axe de rotation.

3. Machine agricole selon la revendication 2, caractérisée en ce que le bras de positionnement (5) est muni d'un prolongement (7) qui dépasse de l'axe de rotation, ce prolongement (7) supportant une marque visible (25).

fig-1

fig-2

fig-3

# Fig-4a    Fig-4b

EP 0 701 395 B1

# fig-4c     fig-4d     fig-4e

EP 0 701 395 B1